Europäisches Patentamt

European Patent Office

Office européen des brevets

(11) Veröffentlichungsnummer: **0 071 878**
**B1**

# EUROPÄISCHE PATENTSCHRIFT

(45) Veröffentlichungstag der Patentschrift:
06.11.85

(51) Int. Cl.⁴: **H 02 M 3/335**

(21) Anmeldenummer: **82106811.1**

(22) Anmeldetag: **28.07.82**

(54) **Stromversorgungseinrichtung.**

(30) Priorität: **01.08.81 DE 3130571**

(43) Veröffentlichungstag der Anmeldung:
**16.02.83 Patentblatt 83/7**

(45) Bekanntmachung des Hinweises auf die Patenterteilung:
**06.11.85 Patentblatt 85/45**

(84) Benannte Vertragsstaaten:
**AT BE FR GB NL**

(56) Entgegenhaltungen:
**DE - A - 2 603 196**
**DE - A - 2 700 547**
**FR - A - 2 230 141**
**US - A - 3 621 361**

**VALVO, TECHNISCHE INFORMATIONEN FÜR DIE
INDUSTRIE, Heft 770415, April 1977, Seiten 1-11,
Hamburg, DE. "Steuer- und Regelschaltung TDA 1060
für Schaltnetzteile"**

(73) Patentinhaber: **Felten & Guilleaume Fernmeldeanlagen
GmbH, Thurn-und-Taxis-Strasse 10 Postfach 4943,
D-8500 Nürnberg 10 (DE)**

(72) Erfinder: **Krahl, Burghard, Ing.grad., Unterhaidelbacher
Hauptstrasse 2, D-8566 Leinburg (DE)**

(74) Vertreter: **Peuckert, Hermann, Philips Patentverwaltung
GmbH Billstrasse 80 Postfach 10 51 49,
D-2000 Hamburg 28 (DE)**

## Beschreibung

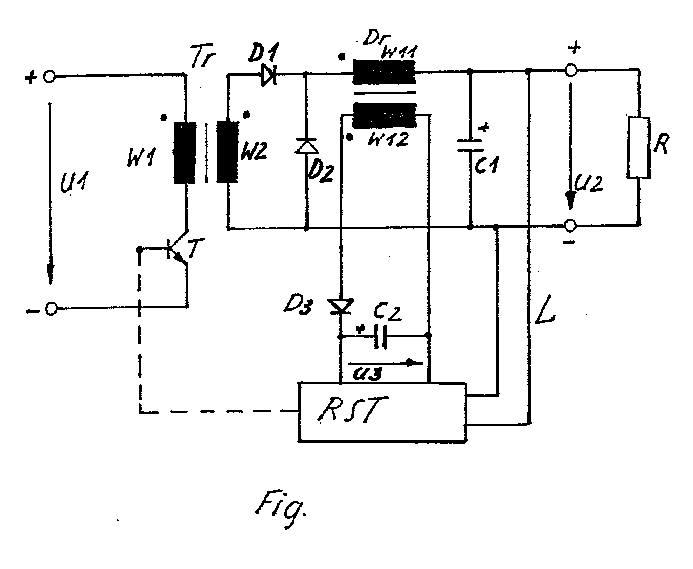

Die Erfindung betrifft eine Stromversorgungseinrichtung gemäss dem Oberbegriff. Eine derartige Stromversorgungseinrichtung ist aus Valvo, «Technische Informationen für die Industrie», 770415, April 1977, Seite 8, Bild 16, bekannt. Die dort gezeigte Schaltungseinrichtung weist im Ausgangskreis einen Stromwandler auf, mit dem eine Steuergrösse für die Regelschaltung abgeleitet wird, die aber ihrerseits eine eigene Stromversorgung aufweist.

Aus der Zeitschrift «Elektronik» 1961, Nr. 6, Seite 177, Bild 5, ist es bekannt, bei einer nach dem Zweipunkt-Regelprinzip arbeitenden Stromversorgungsschaltung mittels einer auf der Drossel des Siebgliedes aufgebrachten zusätzlichen Wicklung eine Rückkopplungsspannung für die Ansteuerschaltung des Schalttransistors zu gewinnen.

Ein Durchflusswandler hat nur eine verhältnismässig geringe Verlustleistung und benötigt, da er bei hohen Frequenzen von z. B. 70 kHz betrieben werden kann, Transformatoren von nur geringem Bauvolumen und geringem Gewicht im Vergleich zu einem bei Netzfrequenz betriebenen Transformator. Der Transformator erlaubt eine zuverlässige galvanische Trennung zwischen dem Primärkreis und dem Ausgangskreis, was oft erwünscht ist. Zum Betrieb des Durchflusswandlers ist ein Oszillator erforderlich, der einen Schalter im Primärkreis mit Impulsen ansteuert. Zur Regelung der Ausgangsspannung wird die Breite dieser Impulse abhängig von den Spannungswerten am Ausgang des Ausgangskreises gesteuert. Hierzu ist eine Regeleinrichtung erforderlich. Die Regel- und Steuereinrichtungen sind unmittelbar mit dem Ausgangskreis verbunden, die gegebenenfalls erforderliche galvanische Trennung gegenüber dem Schalter im Primärkreis kann z. B. dadurch erreicht werden, dass die Steuerimpulse über einen Transformator übertragen werden.

Zum Betrieb der im Ausgangskreis angeordneten Regel-, Steuer- und Überwachungsschaltungen sind Vesorgungsspannungen erforderlich. Es ist wünschenswert, das auch diese Spannungen vom Primärkreis galvanisch getrennt sind. Sie müssen im zulässigen Eingangsspannungsbereich sowie im zulässigen Ausgangsspannungsbereich sicher vorhanden sein.

Ist die Stromversorgungseinrichtung aus einer Gleichspannungsquelle gespeist, kann man zur Erzeugung einer solchen Versorgungsspannung einen Hilfswandler benutzen, dessen Transformator für die erwünschte galvanische Trennung sorgt. Störend sind jedoch der nötige Aufwand für die Steuereinrichtung dieses Hilfswandlers, der hierfür nötige Platzbedarf und die durch die zusätzlichen Einrichtungen verursachten Verluste. Ausserdem können derartige Hilfswandler Störungen im Eingangskreis der Stromversorgungseinrichtungen verursachen.

Bei Speisung aus einem Wechselspannungsnetz kann man zur Erzeugung einer Versorgungsspannung einen an der Eingangsspannung angeschlossenen Hilfstransformator benutzen. Da dieser Hilfstransformator dann eine Spannung mit einer Frequenz von etwa 50 Hz übertragen muss, ergibt sich selbst bei geringer Belastung ein beachtliches Volumen für den Hilfstransformator.

Der Erfindung liegt die Aufgabe zugrunde, eine Versorgungsspannung für die Steuer- und Regelschaltung mit einfachen Mitteln bei geringem Platzbedarf zu erzeugen. Die Verluste sollen möglichst gering sein.

Diese Aufgabe wird bei einer Stromversorgungseinrichtung nach dem Oberbegriff durch die kennzeichnenden Merkmale des Patentanspruchs gelöst.

Die Erfindung wird im folgenden anhand eines Ausführungsbeispieles mit einem Eintaktdurchflusswandler näher erläutert. (Fig.)

Die Stromversorgungseinrichtung wird von der Eingangsspannung U1 gespeist. Im Primärkreis mit der Wicklung W1 des Wandlertransformators Tr liegt der Schalttransistor T, der von einem nicht näher dargestellten Oszillator angesteuert wird. Im Ausgangskreis liegen an der Wicklung W2 des Wandlertransformators Tr der Gleichrichter D1 und die Freilaufdiode D2 sowie ein Siebglied mit der Drossel Dr und dem Kondensator C1. Am Kondensator C1 1st die Ausgangsspannung U2 abnehmbar. Der Widerstand R stellt den Lastwiderstand dar.

Die Drossel Dr weist eine zweite Wicklung W12 auf, an welcher eine Diode D3 und ein Kondensator C2 angeschlossen sind. Am Kondensator C2 liegt eine Spannung U3, die als Versorgungsspannung der nicht näher dargestellten Regel- und Steuereinheit RST zugeführt wird. Durch die Gestrichelt gezeichnete Verbindungslinie zwischen dieser Einheit RST und dem Schalttransistor T ist angedeutet, dass dieser Schalttransistor von der Einheit RST angesteuert wird. Es wird eine Impulsbreitensteuerung angewandt. Über die Leitung L ist die Regel- und Steuereinheit RST mit der Ausgangsspannung U2 verbunden. In der Einheit RST wird der Wert der Ausgangsspannung U2 mit einer Referenzspannung verglichen und abhängig vom Ergebnis dieses Vergleichs wird die Impulsbreite der Steuerimpulse für den Schalttransistor T bemessen.

Während der Leitphase des Schalttransistors T liegt in etwa die Spannung U1 an der Wicklung W1 des Wandlertransformators Tr. An der Wicklung W2 des Wandlertransformators Tr liegt die transformierte Spannung, sie treibt über die Diode D1 und die Wicklung W11 der Drossel Dr einen Strom in den Kondensator C1 sowie in den Lastwiderstand R. Während der Leitphase des Schalttransistors T liegt an den Wicklungsanfängen der Wicklungen W11 und W12 der Drossel Dr positives Potential gegenüber den Wicklungsenden. Die Wicklungsanfänge sind in der Figur mit einem Punkt gekennzeichnet. Während dieser Phase wird auch Energie von der Drossel Dr aufgenommen. In dieser Phase wird über die Wicklung W12 der Drossel Dr eine Spannung gewonnen, die über die Diode D3 der Regel- und Steuereinheit RST zugeführt wird.

Während der Sperrphase des Schalttransistors T wird die Energieübertragung über den Wandlertransformator Tr unterbrochen. Jetzt polt sich die Spannung an der Drossel Dr um und gibt die während der Leitphase des Schalttransistors T eingespeicherte Energie über die Freilaufdiode D2 an den Ausgang ab. Die Diode D3 ist während der Sperrphase des Schalttransistors T gesperrt.

Auch bei einem Kurzschluss am Ausgang ist gewährleistet, dass die Versorgungsspannung zur Verfügung steht. In diesem Fall entfällt die Spannung U2 und damit steht die gesamte Spannung der Wicklung W2 des Wandlertransformators Tr an der Wicklung W11 der Drosssel Dr. Während des Kurzschlusses wird der Schalttransistor T mittels des Reglers auf kurze Leitphasen gesteuert (z.B. 1...2 μs), um die Energieübertragung auf den Ausgang zu begrenzen. Dadurch, dass nun jedoch die gesamte Ausgangsspannung des Wandlertransfomators Tr an der Drossel Dr liegt, wird bewirkt, dass die Versorgungsspannung auch während dieser kurzen Leitphase des Schalttransistors T sicher erzeugt wird.

Dieser Zusammenhang wirkt sich auch vorteilhaft beim Einschalten der Stromversorgungseinrichtung aus, da unmittelbar nach dem Einschalten die Spannung U2 am Kondensator C1 Null Volt beträgt. Damit wird ein schneller Aufbau der Versorgungsspannung U3 sichergestellt.

**Patentanspruch**

1. Stromversorgungseinrichtung mit einem Durchflusswandler, einem Siebglied (C1) mit einer Drossel (Dr) im Ausgangskreis sowie mit einer Steuer- und Regelschaltung (RST), dadurch gekennzeichnet, dass auf der Drossel (Dr) eine zusätzliche Wicklung (W12) und ein Gleichrichter (D3) zur Erzeugung einer Versorgungsspannung (U3) für die Steuer- und Regelschaltung (RST) vorgesehen sind und dass der Gleichrichter (D3) während der Leitphase des Schalttransistors (T) leitet.

**Claim**

1. A power supply arrangement comprising a current path, a filter section (C1) with a choke (Dr) included in the output circuit , the arrangement also comprising a control and regulating circuit (RST), characterized in that the choke (Dr) is provided with an additional winding (W12) and a rectifier for generating a supply voltage (U3) for the control and regulating arrangement (RST) and that the rectifier (D3) conducts during the conducting state of the switching transistor.

**Revendication**

Dispositif d'alimentation de courant équipé d'un convertisseur de passage, d'un élément de filtrage (C1) avec une bobine d'arrêt (Dr) dans le circuit de sortie et d'un circuit de commande et de régulation (RST), caractérisé en ce qu'un enroulement supplémentaire (W12) et un redresseur (D3) sont prévus sur la bobine d'arrêt (Dr) pour produire une tension d'alimentation (U3) pour le circuit de commande et de régulation (RST) et le redresseur (D3) est conducteur pendant la phase de conduction du transistor de commutation (T).

Fig.